Europäisches Patentamt

European Patent Office

Office européen des brevets

(11) Numéro de publication : **0 297 977 B1**

## (12) FASCICULE DE BREVET EUROPEEN

(45) Date de publication du fascicule du brevet :
**25.03.92 Bulletin 92/13**

(51) Int. Cl.$^5$ : **B62D 55/30**

(21) Numéro de dépôt : **88401656.9**

(22) Date de dépôt : **28.06.88**

(54) **Vérin hydropneumatique.**

(30) Priorité : **03.07.87 FR 8709497**

(43) Date de publication de la demande :
**04.01.89 Bulletin 89/01**

(45) Mention de la délivrance du brevet :
**25.03.92 Bulletin 92/13**

(84) Etats contractants désignés :
**BE DE ES FR GB IT**

(56) Documents cités :
**DE-A- 1 630 118**
**DE-A- 2 358 386**
**FR-A- 1 514 404**
**FR-A- 2 145 778**
**US-A- 2 753 036**

(73) Titulaire : **S.A.M.M.- Société d'Applications
des Machines Motrices
Chemin de la Malmaison
F-91570 Bièvres (FR)**

(72) Inventeur : **Joseph, Philippe
Quartier Begay
Loriol du Combat F-84200 Carpentras (FR)**
Inventeur : **Perrochat, Jean-Michel
103, avenue Verdier
F-92120 Montrouge (FR)**

(74) Mandataire : **Martin, Jean-Paul et al
c/o CABINET LAVOIX 2, Place d'Estienne
d'Orves
F-75441 Paris Cedex 09 (FR)**

EP 0 297 977 B1

Jouve, 18, rue Saint-Denis, 75001 PARIS

## Description

La présente invention a pour objet un vérin hydropneumatique, utilisable notamment sur des véhicules chenillés, tels que des engins de chantier ou des chenillettes de damage de la neige sur des pistes de ski, ce vérin étant adapté pour assurer une tension convenable de la chenille.

Il est connu de maintenir la tension de la chenille au moyen d'un vérin hydraulique articulé d'une part sur un bras tendeur d'une poulie de tension située sur l'extrémité supérieure de la chenille, et d'autre part sur le châssis du véhicule ou encore sur le bras de suspension du premier galet monté dans cette chenille. Ce dispositif est complété par un système d'asservissement "actif" équipé d'une unité de contrôle micro-processeur, qui détecte les chutes de tension de la chenille et envoie des ordres correspondants au vérin afin de rétablir la tension.

Ce dispositif est lourd, complexe et onéreux, et surtout ne donne pas réellement satisfaction, en raison du temps de réponse excessif entre la détection du mou de la chenille et l'exécution par le vérin de l'ordre reçu. Il en résulte qu'en fait la chenille n'est pratiquement pas retendue en temps voulu, et que le premier galet se trouve souvent en butée basse et subit des efforts excessifs.

On connait également un tendeur de chenille asservi dit "passif" qui lie les mouvements du premier galet à ceux de la poulie de tension, ce qui assure mécaniquement une tension correcte du brin avant de la chenille. Cette tension est donnée par un vérin mécanique ou à graisse réglé à un entraxe correspondant. Cependant, ce tendeur passif ne permet pas de prendre en compte des paramétres secondaires qui ont une influence défavorable sur la tension de la chenille : mouvements des autres galets, usure de ceux-ci et usure de la chenille, dilatation thermique de ces éléments.

De ce fait, pour maintenir une tension de chenille correcte, le vérin doit être réglé fréquemment.

On connaît enfin, par le FR-A-1 514 404, un vérin hydropneumatique (Fig.4 et 5) comportant une tige creuse fixée à un piston monté coulissant dans un corps tubulaire, dont la chambre hydraulique communique avec un circuit hydraulique incluant d'autres vérins similaires.

Lorsqu'une intervention doit être effectuée sur le train de roulement du véhicule ainsi équipé, par exemple changement de chenille ou de galets, il faut détendre la chenille et pour cela vidanger la chambre hydraulique, puis la remplir à nouveau après l'intervention afin de retendre la chenille. Pour cela, afin d'éviter la pollution du circuit hydraulique par de l'huile contenant des salissures ou saletés diverses, et donc des risques de mauvais fonctionnement par grippage, il faut une huile non polluée, préalablement filtrée. Or, une telle contrainte est pratiquement impossible à satisfaire à bord d'un véhicule sur le terrain, notamment un char de bataille.

Par ailleurs un autre inconvénient de ce vérin connu réside dans le tait que la tige creuse a un diamètre inférieur à celui de la chambre hydraulique, sur la paroi intérieure de laquelle elle ne coulisse donc pas. De ce fait, ce vérin ne peut résister aux efforts latéraux très importants transmis par le galet, et va alors gripper. Ce grippage s'accentue lorsque la chenille se détend, après usure par exemple. En effet la chenille s'allonge, donc la tige avance et se positionne de travers, ce qui accroît l'effort latéral subi.

Enfin, en cas de rupture de la canalisation hydraulique de liaison entre les différents vérins, l'ensemble du circuit est dépressurisé et donc hors service, ce qui est particulièrement grave dans le cas d'un char de bataille en opération.

L'invention a donc pour but de réaliser un vérin hydropneumatique du type asservi passif qui permette des interventions sur le train de roulement sans devoir vidanger sa chambre hydraulique, et qui évite les contraintes et risques de pollution mentionnés ci-dessus.

Le vérin hydro pneumatique visé par l'invention comprend un corps tubulaire fermé à une extrémité et ouvert à l'extrémité opposée, une tige creuse montée coulissante dans ce corps en formant piston de manière étanche, et dans laquelle est formée une première chambre contenant un piston librement coulissant qui divise la chambre en deux compartiments étanches l'un par rapport à l'autre, une seconde chambre étant délimitée entre un fond transversal constituant l'extrémité de la tige creuse et la paroi interne du corps, et ce fond transversal est percé d'un ajutage mettant en communication la seconde chambre avec le compartiment voisin de la tige creuse, ce compartiment et ladite seconde chambre étant remplis d'un liquide hydraulique sous pression tandis que le second compartiment est rempli d'un gaz pressurisé.

Suivant l'invention, ce vérin comporte une enveloppe tubulaire fermée par un fond à une extrémité et ouverte à l'extrémité opposée, dans laquelle le corps coulisse de manière étanche, de telle sorte qu'une troisième chambre, remplie de graisse, est réservée entre le fond de l'enveloppe et un fond transversal fermant l'extrémité du corps, cette chambre de graisse étant pourvue d'un orifice de remplissage ou de vidange.

Lorsque la tension statique de la chenille diminue, par suite par exemple de la dilatation ou de l'usure de la chenille, ou encore des mouvements des galets, la tige glisse dans le corps et la pression hydraulique entre les deux compartiments est déséquilibrée. Le piston librement coulissant est alors automatiquement repoussé par la pression du gaz, le liquide hydraulique pénétrant lentement d'un compartiment à l'autre par l'ajutage précité. De ce fait, la pression hydraulique est automatiquement rétablie au même niveau et la tension correcte de la chenille est maintenue, et ce de façon quasi-statique.

Par ailleurs en cas d'intervention à effectuer sur le train de roulement, on vidange la chambre de graisse afin de contracter le vérin et de détendre la chenille. Après l'intervention, on remet le vérin sous tension par introduction de graisse dans la chambre de graisse, sans aucune risque de grippage du vérin en cas de pollution de la graisse, puisque celle-ci est statique.

D'autres particularités et avantages de l'invention apparaîtront au cours de la description qui va suivre, faite en référence au dessin annexé qui en illustre un mode de réalisation à titre d'exemple non limitatif :

La figure 1 est une vue en élévation longitudinale partielle de l'avant d'une chenille de véhicule équipé d'un dispositif à vérin hydropneumatique selon l'invention.

La figure 2 est une vue en coupe axiale d'un mode de réalisation du vérin hydropneumatique selon l'invention.

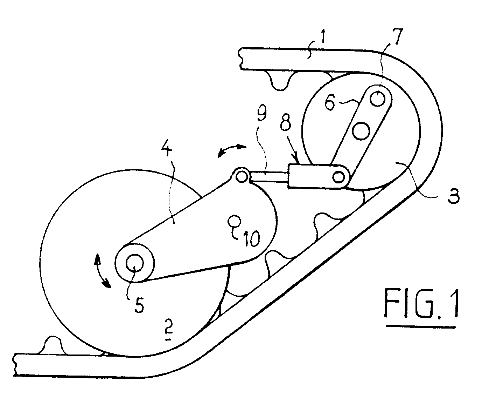

On voit à la Fig.1 la partie avant d'une chenille de véhicule tel qu'un engin de travaux publics ou une chenillette de damage de la neige sur les pistes de ski : la chenille 1 entoure un certain nombre de galets dont seul le premier galet 2 situé à l'avant est représenté, ainsi qu'une poulie 3 de tension de la chenille 1 située au-dessus du galet 2. Ce dernier est équipé d'un bras de suspension 4 articulé sur un axe 5 du galet 2 et sur un pivot 10 solidaire du châssis. La poulie 3 est pourvue d'un bras tendeur 6 fixé à la poulie 3, et dont une extrémité est articulée sur un pivot 7 fixé à la caisse du véhicule, tandis que son extrémité opposée est articulée sur un vérin hydropneumatique 8 dont la tige 9 est elle-même articulée sur le bras de suspension 4.

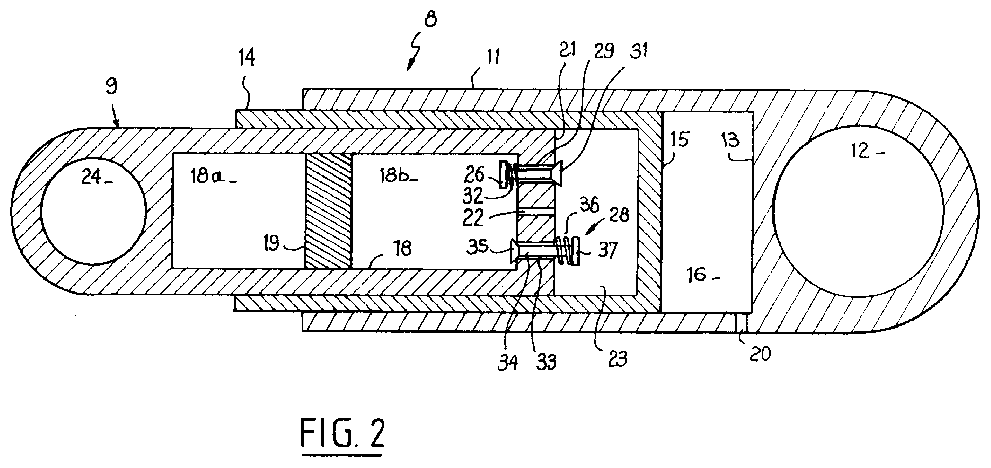

Dans le mode de réalisation représenté à la Fig.2, le vérin 8 comprend une enveloppe tubulaire 11 dont une extrémité présente une ouverture 12 d'articulation sur l'extrémité correspondante du bras tendeur 6. L'enveloppe 11 est fermée par un fond 13 du côté de l'ouverture 12 et ouverte à son extrémité opposée. Dans l'enveloppe 11, coulisse un corps tubulaire 14 fermé à une extrémité par une paroi transversale 15 et ouvert à son extrémité opposée, ce corps 14 étant positionné dans l'enveloppe 11 de manière à réserver une chambre étanche 16 remplie de graisse entre les fonds 13 et 15. La paroi de la chambre 16 est percée d'un orifice 20. La tige creuse 9 est montée coulissante dans le corps 14 de manière étanche en formant piston et dans cette tige 9 est formée une chambre longitudinale 18 contenant un piston 19 librement coulissant, qui divise la chambre en deux compartiments 18a, 18b étanches l'un par rapport à l'autre. L'extrémité de la tige 9 limitant le compartiment 18b est constituée par un fond transversal 21 percé d'un ajutage 22, de préférence axial, et de diamètre très faible. L'ajutage 22 met donc en communication le compartiment 18b avec une chambre 23 réservée entre le fond 15 du corps 14 et le fond 21 de la tige 9. Le compartiment 18b et la chambre 23 sont remplis d'un liquide hydraulique (huile), tandis que le compartiment 18a est rempli d'un gaz tel que l'azote, ce gaz et le liquide hydraulique étant à pression convenable.

Le fond transversal 21 de la tige creuse 9 est pourvu d'un clapet 26 de détente (by-pass) traversant un alésage 29 dudit fond 21, et dont la tête 31, située dans la chambre 23, est normalement maintenue appliquée sur son siège par un ressort 32 sollicitant l'extrémité opposée de la tige du clapet 26 et en appui sur le fond 21.

De plus le fond 21 est muni d'une soupape de sécurité 28 traversant un perçage axial 33 de ce fond. La soupape 28 est constituée d'une tige 34 dont la tête 35, située dans le compartiment 18b de la tige 9, est normalement sollicitée contre son siège en position de fermeture du perçage 33, par un ressort hélicoïdal 36 coaxial à la tige 34. Le ressort 36 est placé dans la chambre 23, prend appui sur le fond 21, et sollicite l'extrémité 37 de la tige 34 vers l'intérieur de la chambre 23, c'est-à-dire dans le sens de la fermeture du passage 33 par la tête 35.

L'extrémité de la tige 9 extérieure au corps 14 est percée d'un oeillet 24 permettant son articulation sur le bras de suspension 4.

Le fonctionnement du vérin hydropneumatique qui vient d'être décrit est le suivant :

Ce vérin 8 sert de bielle entre le bras tendeur 6 et le bras de suspension 4. Le réglage de la tension statique de la chenille 1 s'effectue par injection de graisse dans la chambre 23 par l'orifice 20 de l'enveloppe 11. A la valeur de cette tension statique correspond une cote d'entraxe déterminée entre les points d'accrochage du vérin 8 sur les bras 4 et 6, et des pressions correspondantes du gaz dans le compartiment 18a et du liquide hydraulique dans le compartiment 18b et la chambre 23.

Par suite de l'usure progressive des galets et de la chenille ou d'une dilatation thermique importante de la chenille, la tension statique de celle-ci diminue. Cette baisse de tension entraîne une légère extension du vérin 8, la tige 9 sortant légèrement du corps 14 (vers la gauche sur la Fig.2). De ce fait, le volume de la chambre 23 augmente, et un peu de liquide hydraulique passe par l'ajutage 22 dans cette chambre 23 de sorte que la pression hydraulique se rééquilibre entre le compartiment 18b et la chambre 23. Le gaz sous pression (par exemple azote) dans le compartiment 18a a déplacé automatiquement et instantanément le piston 19 vers l'ajutage 22, ce qui a rétabli la pression hydraulique dans la chambre 23 et le compartiment 18b.

Chaque baisse de la tension de la chenille 1 à l'avant du véhicule est donc immédiatement et automatiquement compensée, sans qu'il soit nécessaire de procéder à aucune intervention sur le vérin. L'ajutage 22 rend dynamiquement le vérin 8 rigide et permet les corrections de tension en fonctionnement quasi-statique, et ce sans perte de l'effort de pression, comme cela est le cas dans les autres dispositifs connus, ce qui constitue un avantage considérable.

Par ailleurs, en cas de flottement de la chenille 1 tendant l'allonger, le volume de la chambre 23 augmente de sorte que sa pression hydraulique diminue. Cette baisse de pression provoque l'ouverture du clapet "by-pass" 26 et le passage rapide d'huile dans la chambre de détente 23 sous la pression du gaz contenu dans le compartiment 18a.

Enfin, en cas de choc brutal de la poulie de tension 3 sur un obstacle, ou de tension de chenille prohibitive, la surpression hydraulique brusque créée dans la chambre 23 provoque l'ouverture de la soupape de sécurité 28 contre la force antagoniste du ressort 36. Ceci rétablit 1 équilibre des pressions hydrauliques dans le compartiment 18b et la chambre 23.

La soupape 28 évite donc des pressions hydrauliques ou des efforts destructeurs susceptibles de provoquer l'éclatement du vérin.

La présence de la chambre de graisse 16 présente l'important avantage suivant :

En cas d'intervention à effectuer sur le train de roulement (changement de chenille ou de galets) , il faut détendre la chenille. On vidange alors la chambre de graisse 16 par l'orifice 20, ce qui permet de contracter le vérin et de libérer la chenille. Après exécution de l'opération prévue (remontage de la chenille) on retend la chenille 1 par introduction de graisse sous pression par l'orifice 20 dans la chambre 16.

Cette remise sous tension du vérin peut se faire au moyen d'une pompe à graisse faisant partie du lot de bord du véhicule, et par ailleurs, la graisse ayant une fonction statique, une pollution éventuelle de la graisse nouvellement introduite n'a aucune influence sur le fonctionnement du tendeur.

Bien entendu, le vérin 8 peut être monté avec sa tige 9 articulée sur le bras tendeur 6 et son enveloppe 11 articulé sur le bras de suspension 4.

Le vérin hydropneumatique selon l'invention est d'une réalisation très simple et par conséquent peu onéreuse.

## Revendications

1. Vérin hydropneumatique pour véhicules à chenilles, comprenant un corps tubulaire (14) fermé à une extrémité et ouvert à l'extrémité opposée, une tige creuse (9) montée coulissante dans ce corps (14) en formant piston de manière étanche, et dans laquelle est formée une première chambre (18) contenant un piston (19) librement coulissant qui divise la chambre en deux compartiments (18a,18b) étanches l'un par rapport à l'autre, une seconde chambre (23) étant délimitée entre un fond transversal (21) constituant l'extrémité de la tige creuse (9) et une paroi transversale (15) du corps (14), fermant ce dernier à une extrémité et ce fond transversal (21) est percé d'un ajutage (22) mettant en communication la seconde chambre (23) avec le compartiment voisin (18b) de la tige creuse (9), ce compartiment (18b) et ladite seconde chambre (23) étant remplis d'un liquide hydraulique sous pression tandis que le second compartiment (18a) est rempli d'un gaz pressurisé, caractérisé en ce qu'il comporte une enveloppe tubulaire (11) fermée par un fond (13) à une extrémité et ouverte à l'extrémité opposée, dans laquelle le corps (14) coulisse de manière étanche, de telle sorte qu'une troisième chambre (16), remplie de graisse, est réservée entre le fond (13) de l'enveloppe (11) et un fond transversal (15) fermant l'extrémité du corps (14), cette chambre de graisse (16) étant pourvue d'un orifice (20) de remplissage et de vidange.

2. Vérin selon la revendication 1, caractérisé en ce que l'extrémité de la tige (9) extérieure au corps (14) et le fond de l'enveloppe (11) sont adaptés pour être articulés sur des supports (4,6).

3. Vérin selon l'une des revendications 1 et 2, caractérisé en ce que le fond transversal (21) de la tige creuse (9) est pourvu d'un clapet (26) pouvant s'ouvrir en cas de baisse de la pression hydraulique dans ladite seconde chambre (23) afin de permettre un passage rapide de liquide hydraulique du compartiment contigu (18b) du corps (14) dans ladite seconde chambre (23).

4. Vérin selon la revendication 3, caractérisé en ce que le fond transversal (21) de la tige creuse (9) est muni d'une soupape de sécurité (28) normalement maintenue fermée par un ressort (36) disposé de manière qu'une surpression hydraulique brutale dans ladite seconde chambre (23) ouvre la soupape (28) à l'encontre de la force du ressort et autorise le passage de liquide hydraulique de cette seconde chambre dans le compartiment (18b) voisin de la tige creuse (9).

## Patentansprüche

1. Hydropneumatische Stelleinrichtung für Raupenfahrzeuge, mit einem rohrförmigen Körper (14), der an einem Ende geschlossen und am gegenüberliegenden Ende offen ist, einer Hohlstange (9), die einen Kolben bildend dichtend im Körper (14) gleitend angebracht ist und in der eine erste Kammer (18) ausgebildet ist, die einen frei gleitenden Kolben (19) enthält, der die Kammer in zwei in Bezug aufeinander dicht abgeschlossene Teilkammern (18a, 18b) unterteilt, wobei eine zweite Kammer (23) von einen querverlaufenden Boden (21), der das Ende der Hohlstange (9) bildet, und einer querverlaufenden Wand (15) des Körpers (14), die diesen an einem Ende abschließt, begrenzt wird, und wobei der querverlaufende Boden (21) von einer Düse (22) durchsetzt ist, die die zweite Kammer (23) mit der benachbarten Teilkammer (18b) der Hohlstange (9) in Verbindung setzt, wobei die Teilkammer (18b) und die zweite Kammer (23) mit einer unter Druck stehenden Hydraulikflüssigkeit gefüllt sind, während die zweite Teilkammer (18a) mit einem unter Druck stehenden Gas gefüllt ist, dadurch gekennzeichnet, daß sie eine rohrförmige Umhüllung (11) umfaßt, die an einem Ende durch einen Boden (13) abgeschlossen und am gegenüberliegenden Ende offen ist und in der der Körper (14) dichtend gleitet, derart, daß eine mit Schmiermittel gefüllte dritte Kammer (16) zwischen dem Boden (13) der Umhüllung (11) und einem querverlaufenden Boden (15), der das Ende des Körpers (14) abschließt, verbleibt, wobei diese Schmiermittelkammer (16) mit einer Füll- und Entleeröffnung (20) versehen ist.

2. Stelleinrichtung nach Anspruch 1, dadurch gekennzeichnet, daß das außerhalb des Körpers (14) liegende Ende der Stange (9) und der Boden der Umhüllung (11) für eien Anlenkung an Trägern (4,6) eingerichtet sind.

3. Stelleinrichtung nach einem der Ansprüche 1 und 2, dadurch gekennzeichnet, daß der querverlaufende Boden (21) der Hohlstange (9) mit einem Sperrventil (26) versehen ist, das sich im Falle der Verringerung des hydraulischen Drucks in der zweiten Kammer (23) öffnen kann, um einen schnellen Durchtritt der Hydraulikflüssigkeit aus der benachbarten Teilkammer (18b) des Körpers (14) in die zweite Kammer (23) zu ermöglichen.

4. Stelleinrichtung nach Anspruch 3, dadurch gekennzeichnet, daß der querverlaufende Boden (21) der Hohlstange (9) mit einem Sicherheitsventil (28) versehen ist, das im Normalbetrieb von einer Feder (36) geschlossen gehalten wird, die so angeordnet ist, daß ein starker hydraulischer Überdruck in der zweiten Kammer (23) das Ventil entgegen der von der Feder ausgeübten Kraft öffnet und den Durchtritt von Hydraulikflüssigkeit aus der zweiten Kammer in die benachbarte Teilkammer (18b) der Hohlstange (9) gestattet.

**Claims**

1. A hydropneumatic jack for tracked vehicles, comprising a tubular body (14) closed at one end and open at the opposite end, a hollow rod (9) slidably mounted in the body (14) in a sealing-tight manner and forming a piston, and in which there is formed a first chamber (18) containing a freely slidable piston which divides the chamber into two compartments (18a, 18b) which are sealed off from each other, a second chamber (23) being defined between a transverse end wall (21) constituting the end of the hollow rod (9) and a transverse wall (15) of the body (14) closing this latter at one end, the said transverse wall (21) being provided with a nozzle (22) which puts the second chamber (23) in communication with the adjacent compartment (18b) of the hollow rod (9), the said compartment (18b) and the said second chamber (23) being filled with a pressurised hydraulic fluid while the second compartment (18a) is filled with a pressurised gas, characterised in that it comprises a tubular casing (11) closed at one end by a wall (13) and open at the opposite end, in which the body (14) slides in sealing-tight fashion, so that a third chamber (16) filled with grease, is maintained between the end wall (13) of the casing (11) and a transverse wall (15) which closes off the end of the body (14), this grease chamber (16) being provided with an orifice (20) for filling and emptying purposes.

2. A jack according to Claim 1, characterised in that the end of the rod (9) outside the body (14) and the end wall of the casing (11) are adapted to be articulated on supports (4, 6).

3. A jack according to one of Claims 1 and 2, characterised in that the transverse end wall (21) of the hollow rod (9) is provided with a valve (26) which is adapted to open in the event of a drop in hydraulic pressure in the said second chamber (23) in order to allow a rapid passage of hydraulic fluid from the contiguous compartment (18b) in the body (14) into the said second chamber (23).

4. A jack according to Claim 3, characterised in that the transverse end wall (21) of the hollow rod (9) is provided with a safety valve (28) which is normally kept closed by a spring (36) which is so disposed that a sudden hydraulic over-pressure in the said second chamber (23) opens the valve (28) against the force of the spring and allows hydraulic fluid to pass from this second chamber into the adjacent compartment (18b) in the hollow rod (9).

FIG.1

**FIG. 2**